(19) Europäisches Patentamt
European Patent Office
Office européen des brevets

(11) EP 0 844 263 B1

(12) # EUROPÄISCHE PATENTSCHRIFT

(45) Veröffentlichungstag und Bekanntmachung des Hinweises auf die Patenterteilung:
**15.01.2003 Patentblatt 2003/03**

(51) Int Cl.[7]: **C08G 61/08**, B01J 31/24

(21) Anmeldenummer: **97810831.4**

(22) Anmeldetag: **06.11.1997**

(54) **Katalysatorgemisch für die ringöffnende Metathesepolymerisation**

Catalytic mixture for ring-opening metathesis polymerization

Mélange catalytique pour la polymérisation par métathèse par ouverture de cycle

(84) Benannte Vertragsstaaten:
**CH DE ES FR GB IT LI**

(30) Priorität: **15.11.1996 CH 282696**

(43) Veröffentlichungstag der Anmeldung:
**27.05.1998 Patentblatt 1998/22**

(73) Patentinhaber: **Ciba Specialty Chemicals Holding Inc.**
**4057 Basel (CH)**

(72) Erfinder:
- **Mühlebach, Andreas**
  **1782 Belfaux (CH)**
- **van der Schaaf, Paul Adriaan**
  **1700 Fribourg (CH)**
- **Hafner, Andreas**
  **3177 Laupen (CH)**

(56) Entgegenhaltungen:
**WO-A-96/16100** **WO-A-96/20235**
**US-A- 5 198 511**

- **DEMONCEAU, A. ET AL.: "Ruthenium-catalysed ring-opening..." JOURNAL OF MOLECULAR CATALYSIS, Bd. 76, 1992, Seiten 123-132, XP002101165**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 844 263 B1

Printed by Jouve, 75001 PARIS (FR)

## Beschreibung

Die vorliegende Erfindung betrifft eine Katalysator-Zusammensetzung aus einem Ruthenium- oder Osmiumphosphinkomplex und einem Alkin; eine Mischung enthaltend ein Diels-Alder-Addukt von Cyclopentadien und eine solche Katalysator-Zusammensetzung; ein Verfahren zur Herstellung eines Metathesepolymerisats sowie die Verwendung der polymerisierbaren Zusammensetzung als Giessharz, Imprägnierharz oder als Umhüllungsmaterial für elektrische oder elektronische Bauteile.

In der WO 93/13171 werden luft- und wasserstabile Einkomponenten- und Zweikomponenten-Katalysatoren auf Basis von Carbonylgruppen enthaltenden Molybdänund Wolframverbindungen sowie Ruthenium- und Osmiumverbindungen mit mindestens einem Polyenliganden für die thermische und photoaktivierte ringöffnende Metathesepolymerisation (ROMP) von gespannten Cycloolefinen, besonders Norbomen und Norbomenderivaten, beschrieben. Als Co-Katalysatoren für die Zweikomponenten-Katalysatoren werden u.a. 1-Alkine empfohlen.

Demonceau et al. [A. Demonceau, A.F. Noels, E. Saive und A.J., Hubert: J. Mol. Catal. 76, 123-132 (1992)] beschreiben$[(C_6H_5)_3]_3PRuCl_2$,$[(C_6H_5)_3]_3PRuHCl$ und (p-Cymol)$RuCl_2P(C_6H_{11})_3$ als thermische Katalysatoren für die ringöffnende Metathesepolymerisation von Norbomen. Die relativ geringe Aktivität dieser Katalysatoren wird durch den Zusatz von Diazoestern gesteigert. Es wird auch erwähnt, dass lediglich (p-Cymol)$RuCl_2P(C_6H_{11})_3$ Norbomen in relativ kurzer Zeit bei 60 °C zu polymerisieren vermag. Als weiteres Monomer wird Cycloocten genannt. Andere für die Metathesepolymerisation geeignete Cycloolefine werden nicht erwähnt.

In der WO 96/20235 werden Ruthenium- und Osmiumkomplexverbindungen als ausgezeichnete Katalysatoren für die Metathesepolymerisation von Di- und Oligocyclopentadienen beschrieben.

Überraschenderweise wurde nun gefunden, dass durch den Zusatz von 1-Alkinen die katalytische Aktivität der Ruthenium- und Osmiumphosphine ganz erheblich gesteigert und die Eigenschaften der Polymerisate erheblich verbessert werden. Auf diese Weise lassen sich innerhalb kürzerer Polymerisationszeiten Polymerisate mit ausgezeichneten physikalischen und mechanischen Eigenschaften herstellen. Das Katalysatorsystem ist zudem latent und lagerstabil sowie unempfindlich gegen Luft und Feuchtigkeit, was es erlaubt, auch formulierte polymerisierbare Zusammensetzungen in den Handel zu bringen.

Gegenstand der vorliegenden Erfindung ist eine Zusammensetzung enthaltend

(a) eine Verbindung der Formel I

$$(R_1R_2R_3P)_xL_yMe^{2+}Z_1^-Z_2^- \quad (I),$$

worin $R_1$, $R_2$ und $R_3$ unabhängig voneinander H, $C_1$-$C_{20}$-Alkyl, $C_1$-$C_{20}$-Alkoxy, unsubstituiertes oder mit $C_1$-$C_6$-Alkyl, $C_1$-$C_6$-Halogenalkyl oder $C_1$-$C_6$-Alkoxy substituiertes $C_4$-$C_{12}$-Cycloalkyl oder Cycloalkoxy, oder unsubstituiertes oder mit $C_1$-$C_6$-Alkyl, $C_1$-$C_6$-Halogenalkyl oder $C_1$-$C_6$-Alkoxy substituiertes $C_6$-$C_{16}$-Aryl oder $C_6$-$C_{16}$-Aryloxy, oder unsubstituiertes oder mit $C_1$-$C_6$-Alkyl, $C_1$-$C_6$-Halogenalkyl oder $C_1$-$C_6$-Alkoxy substituiertes $C_7$-$C_{16}$-Aralkyl oder $C_7$-$C_{16}$-Aralkyloxy darstellen; die Reste $R_2$ und $R_3$ gemeinsam unsubstituiertes oder mit $C_1$-$C_6$-Alkyl, $C_1$-$C_6$-Halogenalkyl oder $C_1$-$C_6$-Alkoxy substituiertes Tetra- oder Pentamethylen, oder Tetraoder Pentamethylendioxyl bedeuten, oder unsubstituiertes oder mit $C_1$-$C_6$-Alkyl, $C_1$-$C_6$-Halogenalkyl oder $C_1$-$C_6$-Alkoxy substituiertes und mit ein oder zwei 1,2-Phenylenresten kondensiertes Tetra- oder Pentamethylen, oder Tetra- oder Pentamethylendioxyl darstellen, oder unsubstituiertes oder mit $C_1$-$C_6$-Alkyl, $C_1$-$C_6$-Halogenalkyl oder $C_1$-$C_6$-Alkoxy substituiertes und in den 1,2- und 3,4-Stellungen mit 1,2-Phenylen kondensiertes Tetramethylendioxyl darstellen, und $R_1$ die zuvor angebene Bedeutung hat;

L einen Neutralliganden bedeutet, Me für Ru oder Os steht, $Z_1^-$ und $Z_2^-$ je ein einfach geladenes Anion oder $Z_1^-$ und $Z_2^-$ zusammen ein zweifach geladenes Anion darstellen, x eine Zahl von 1 bis 3 und y eine Zahl von 0 bis 3 darstellen, wobei gilt $2 \leq x+y \leq 4$; und

(b) eine Verbindung der Formel II

$$R_4\text{-}C{\equiv}C\text{-}H \quad (II),$$

worin $R_4$ Wasserstoff oder einen einwertigen organischen Rest mit bis zu 30 C-Atomen bedeutet, welcher ein oder mehrere Silicium-, Phosphor-, Stickstoff-, Sauerstoff-, Schwefel- oder Halogenatome enthalten kann.

In den Formeln I und II können die Alkylgruppen geradkettig oder verzweigt sein. Dasselbe gilt auch für den bzw. jeden Alkylteil von Alkoxy, Halogenalkyl und von weiteren Alkyl enthaltenden Gruppen. Diese Alkylgruppen enthalten bevorzugt 1 bis 12, besonders bevorzugt 1 bis 8 und insbesondere bevorzugt 1 bis 4 C-Atome.

Alkyl umfaßt beispielsweise Methyl, Ethyl, Isopropyl, n-Propyl, n-Butyl, Isobutyl, sek.-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Alkoxy ist beispielsweise Methoxy, Ethoxy, Propyloxy, Isopropyloxy, n-Butyloxy, Isobutyloxy, sek.-Butyloxy und tert.-Butyloxy.

Halogenalkyl umfaßt beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl, 2,2,2-Trichlorethyl sowie halogenierte, besonders fluorierte oder chlorierte Isopropyl-, n-Propyl-, n-Butyl-, Isobutyl-, sek.-Butyl-und tert.-Butylgruppen sowie die verschiedenen isomeren halogenierten Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.

Bei Cycloalkyl handelt es sich bevorzugt um $C_5$-$C_8$-Cycloalkyl, besonders um $C_5$- oder $C_6$-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Cycloalkoxygruppen sind beispielsweise Cyclopentyloxy, Methylcyclopentyloxy und Cyclohexyloxy.

Aryl enthält bevorzugt 6 bis 10 C-Atome. Es kann sich beispielsweise um Phenyl, Pentalinyl, Indenyl, Naphtyl, Azulinyl und Anthryl handeln.

Aryloxygruppen sind beispielsweise Phenyloxy, Naphthyloxy und Anthryloxy.

Aralkyl enthält bevorzugt 7 bis 12 C-Atome und besonders bevorzugt 7 bis 10 C-Atome. Es kann sich zum Beispiel um Benzyl, Phenethyl, 3-Phenylpropyl, $\alpha$-Methylbenzyl, 4-Phenylbutyl und $\alpha,\alpha$-Dimethylbenzyl handeln.

Beispiele für Aralkyloxygruppen sind Benzyloxy, Phenethyloxy, 3-Phenylpropyloxy, $\alpha$-Methylbenzyloxy, 4-Phenylbutyloxy und $\alpha,\alpha$-Dimethylbenzyloxy.

Bevorzugt als Komponente (a) sind Verbindungen der Formel I, worin Me für Ruthenium steht.

Weiterhin bevorzugt als Komponente (a) sind Verbindungen der Formel I, worin $R_1$, $R_2$ und $R_3$ unabhängig voneinander für $C_1$-$C_6$-Alkyl, $C_1$-$C_6$-Alkoxy, $C_4$-$C_{12}$-Cycloalkyl, $C_4$-$C_{12}$-Cycloalkoxy, $C_6$-$C_{16}$-Aryl oder $C_6$-$C_{16}$-Aryloxy stehen.

Besonders bevorzugt sind Verbindungen der Formel I, worin $R_1$, $R_2$ und $R_3$ unabhängig voneinander für Isopropyl, sek.-Butyl, Phenyl, Tolyl, Cyclopentyl oder Cyclohexyl stehen.

L steht in der Formel I vorzugsweise für unsubstituiertes oder mit 1 bis 3 $C_1$-$C_4$-Alkyl substituiertes Benzol, Thiophen, Benzonitril oder Acetonitril, Stickstoff ($N_2$), einen unsubstituierten oder teilweise oder vollständig fluorierten $C_1$-$C_4$-Alkohol, CO, $H_2O$ oder $NH_3$.

Bevorzugt sind weiterhin Verbindungen der Formel I, worin $Z_1^-$ und $Z_2^-$ unabhängig voneinander für $H^-$, $F^-$, $Cl^-$, $Br^-$, $I^-$ oder unsubstituiertes oder durch eine oder mehrere Hydroxidgruppen, Aminogruppen, Halogenatome, $C_1$-$C_{20}$-Alkyl-, $C_1$-$C_{20}$-Alkoxy-, $C_4$-$C_{12}$-Cycloalkyl-, $C_4$-$C_{12}$-Cycloalkoxy-, $C_6$-$C_{16}$-Aryl-, $C_6$-$C_{16}$-Aryloxy- oder $C_7$-$C_{16}$-Aralkylgruppen substituiertes Cyclopentadienyl stehen.

Die Komplexverbindungen der Formel I sind bekannt und beispielsweise in der WO 96/16100 und der WO 96/20235 beschrieben.

Beispiele für Ruthenium- und Osmiumverbindungen sind der Formel I sind [Tos bedeutet Tosylat, Cp steht für Cyclopentadienyl und $C_6H_{11}$ ist Cyclohexyl]: $(C_6H_{11})_2HPRu$(p-Cymol)$Cl_2$, $(C_6H_{11})_3PRu$(p-Cymol)$Cl_2$, $(C_6H_{11})_3PRu$(p-Cymol)$(Tos)_2$, $(C_6H_{11})_3PRu$(p-Cymol)$Br_2$, $(C_6H_{11})_3PRu$(p-Cymol)ClF, $(C_6H_{11})_3PRu(C_6H_6)(Tos)_2$, $(C_6H_{11})_3PRu(CH_3$-$C_6H_5)(Tos)_2$, $(C_6H_{11})_3PRu(C_{10}H_8)(Tos)_2$, (i-$C_3H_7)_3PRu$(p-Cymol)$Cl_2$, $(CH_3)_3PRu$(p-Cymol)$Cl_2$, $(C_6H_{11})_3PRu(CH_3$-CN)$(C_2H_5$-OH)$(Tos)_2$, $(C_6H_{11})_3PRu$(p-Cymol)$(CH_3$-$CN)_2(PF_6)_2$, $(C_6H_{11})_3PRu$(p-Cymol)$(CH_3$-$CN)_2(Tos)_2$, (n-$C_4H_9)_3PRu$(p-Cymol)$(CH_3$-$CN)_2(Tos)_2$, $(C_6H_{11})_3PRu(CH_3CN)Cl_2$, $(C_6H_{11})_3PRu(CH_3$-$CN)_2Cl_2$, (n-$C_4H_9)_3PRu$(p-Cymol)$Cl_2$, $(C_6H_{11})_3PRu$(p-Cymol)$(C_2H_5OH)_2(BF_4)_2$, $(C_6H_{11})_3PRu$(p-Cymol)$(C_2H_5OH)_2(PF_6)_2$, (i-$C_3H_7)_3POs$(p-Cymol)$Cl_2$, $(CH_3)_3POs$(p-Cymol)$Cl_2$, $(C_6H_5)_3POs$(p-Cymol)$Cl_2$, $[(C_6H_{11})_3P]_3Ru(CH_3$-CN), $(C_5H_9)_3PRu$(p-Cymol)$Cl_2$, $(C_6H_{11})_3PRu$(p-Cymol)HCl, $(C_6H_{11})_3PRu[1,2,4,5$-$(CH_3)_4C_6H_2]Cl_2$, $(C_6H_{11})_3PRu[1,3,5$-(i-$C_3H_7)_3C_6H_3]Cl_2$, $(C_6H_{11})_3PRu[(C_4H_9)$-$C_6H_5]Cl_2$, $(C_6H_{11})_3POs$(p-Cymol)$Cl_2$, $(C_6H_5)_3PRu$(p-Cymol)HCl, $[(C_6H_{11})_3P]_2Ru(CH_3$-CN)$(Tos)_2$, $RuCl_2$(p-Cymol)$[(C_6H_{11})_2PCH_2CH_2P(C_6H_{11})_2]$, $(C_6H_{11})_3PRu$(p-Cymol)$(C_2H_5OH)(BF_4)_2$, $(C_6H_{11})_3PRu(C_6H_6)(C_2H_5OH)_2(Tos)_2$, $(C_6H_{11})_3PRu$(i-$C_3H_7$-$C_6H_5$)(Tos )$_2$, $(C_6H_{11})_3PRu(C_6H_6)$(p-Cymol)$Br_2$, $(C_6H_{11})_3PRu$(Biphenyl)$(Tos)_2$, $(C_6H_{11})_3PRu$(Anthracen)$(Tos)_2$, (2-$CH_3C_6H_4)_3POs$(p-Cymol)$Cl_2$ und $(C_6H_{11})_3PRu$(Chrysen)$(Tos)_2$.

Besonders bevorzugte Verbindungen der Formel I sind $[(C_6H_{11})_3P]_2RuCl_2$, $[(C_6H_5)_3P]_3$ $RuCl_2$, $[(C_6H_5)_3P]_3(CO)RuH_2$, $[(C_6H_5)_3P]_3$ RuClCp, $[(C_6H_{11})_3P]_2(CH_3OH)Ru(Tos)_2$, [(o-Tolyl)$_3$P]$_3$RuCl$_2$, $[(CH_3)_2CH]_3P$(p-Cymol)$RuCl_2$ und insbesondere $(C_6H_{11})_3P$(p-Cymol)$RuCl_2$.

Die Verbindungen der Formel II sind ebenfalls bekannt und zum Teil im Handel erhältlich. Beispiele dafür sind Ethin, Phenylethin, 4-tert.-Butylphenylethin, Trimethylsilylethin, Triethylsilylethin, Triisopropylsilylethin, Ethylethinylether, 2-Ethinylpyridin, 4-Ethinyltoluol, 1-Ethinylcyclohexylamin, Propin, 3-Cyclohexyl-1-propin, 1-Brom-2-propin, 1-Chlor-2-propin, 1-Dimethylamino-2-propin, 1-Diethylamino-2-propin, 3-Trimethylsilyl-1-propin, 3-Trimethylsilyloxy-1-propin, Propargylacrylat, Propargylacetat, Dipropargylether, Propargylaldehyddiethylacetal, N-Propargyloxyphthalimid, Propargylpropionat, Propargyl-ptoluolsulfonat, Propinsäure, Propinsäuremethylester, Propinsäureethylester, 1-Butin, 3-Methyl-1-butin, 4-Phenyl-1-butin, 3,3-Dimethyl-1-butin, 1-Cyano-4-butin, 2-Methyl-1-buten-3-in, 4-Trimethylsilyloxy-1-butin, 3-Trimethylsilyloxy-1-butin, 3-Methyl-3-trimethylsilyloxy-1-butin, 1-Pentin, 3-Methyl-1-pentin, 5-Chlor-1-pentin, 1-Triethylsilyloxy-4-pentin, 1,4-Pentadiin, 1-Trimethylsilyl-1,4-pentadiin, 4-Pentinsäure, 1-Hexin, 1,5-Hexadiin, 5-Hexinsäure, 5-Hexinsäurenitril, 1-Heptin, 1,6-Heptadiin, 1-Octin, 1,7-Octadiin, 1-Nonin, 8-Noninsäure, 1,8-Nonadiin, 1-Decin, 1,9-Decadiin, 1-Dodecin, 1-Undecin, 10-Undecinsäure, 10-Undecinsäuremethylester, 1-Tridecin, 1-Tetradecin, 1-Pentadecin, 1-Hexadecin und 1-Octadecin.

Die erfindungsgemässen Zusammensetzungen enthalten als Komponente (b) vorzugsweise eine Verbindung der Formel II, worin $R_4$ eine unsubstituierte oder durch eine oder mehrere Aminogruppen oder Halogenatome substituierte $C_1$-$C_{20}$-Alkyl-, $C_1$-$C_{20}$-Alkoxy-, $C_4$-$C_{12}$-Cycloalkyl-, $C_4$-$C_{12}$-Cycloalkoxy-, $C_6$-$C_{16}$-Aryl-, $C_6$-$C_{16}$-Aryloxy- oder $C_7$-$C_{16}$-Aralkylgruppe darstellt.

Besonders bevorzugt bedeutet $R_4$ in der Formel II $C_1$-$C_{12}$-Alkyl oder $C_6$-$C_{10}$-Aryl.

Insbesondere bevorzugte Komponenten (b) sind 1-Heptin, 1-Octin, 1-Decin oder Phenylethin.

Die Mengen der Komponenten (a) und (b) können in den erfindungsgemässen Zusammensetzungen in weiten Bereichen variieren.

Vorzugsweise beträgt das Gewichtsverhältnis der Komponenten (a) : (b) 25 : 1 bis 1 : 10, insbesondere 10 : 1 bis 1 2 und ganz besonders bevorzugt 7 : 1 bis 2:1.

Besonders geeignet sind Zusammensetzungen enthaltend etwa äquimolare Mengen der Komponente (a) und (b)., d. h. Zusammensetzungen, worin das molare Verhältnis der Komponenten (a) : (b) 1,1:1 bis 1 : 1,1 beträgt.

Wie bereits eingangs erwähnt, eignen sich die erfindungsgemässen Zusammensetzungen als lagerstabile Zweikomponenten-Katalysatoren für die ringöffnende Metathese-Polymerisation von Cyclopentadien-Addukten. Dieses neue Katalysator-System ermöglicht die Polymerisation von Dicyclopentadien und anderen Cyclopentadien-Addukten in wesentlich kürzerer Zeit, wobei eine hohe Reaktionsenthalpie und nur ein geringer Gewichtsverlust zu beobachten ist. Die Polymerisate zeichnen sich durch eine hohe Glassübergangstemperatur und ganz allgemein durch gute mechanische Eigenschaften aus.

Besonders geeignete Komponenten (b) sind Verbindungen der Formel II, worin $R_4$ einen hydroxylgruppenhaltigen Rest darstellt. Die Verwendung solcher Co-Katalysatoren führt überraschenderweise zu einer sehr gleichmässigen Freisetzung der Reaktionsenthalpie, d.h. es treten keine hohen Spitzentemperaturen während der Polymerisation auf. Durch den Zusatz von hydroxylgruppenhaltigen Acetylenen lässt sich beispielsweise bei der Polymerisation von Dicyclopentadien die Spitzentemperatur von üblicherweise ca. 180 °C auf <100 °C senken, was sich in einer Verbesserung der mechanischen Eigenschaften auswirkt.

Einen weiteren Erfindungsgegenstand bildet daher eine Zusammensetzung enthaltend die oben definierten Komponenten (a) und (b) und zusätzlich

(c) ein Diels-Alder-Addukt von Cyclopentadien.

Bevorzugte Komponenten (c) sind Verbindungen der Formel III

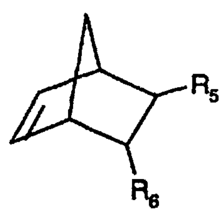

(III),

worin $R_5$ und $R_6$ unabhängig voneinander Wasserstoff, $C_1$-$C_{12}$-Alkyl, Phenyl, Tolyl, Cyclohexyl, Cyclohexenyl, Halogen, Cyano, $C_1$-$C_{12}$-Hydroxyalkyl oder $C_1$-$C_{12}$-Halogenalkyl bedeuten oder $R_5$ und $R_6$ zusammen mit den C-Atomen, an die sie gebunden sind, einen fünf- oder sechsgliedrigen Ring bilden.

Geeignete Diels-Alder-Addukte sind beispielsweise die folgenden Verbindungen:

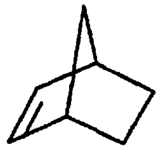 (1), 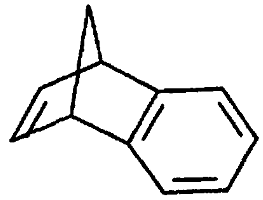 (2), 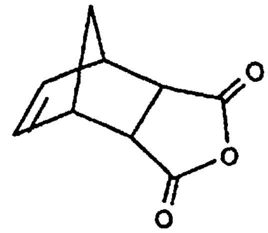 (3),

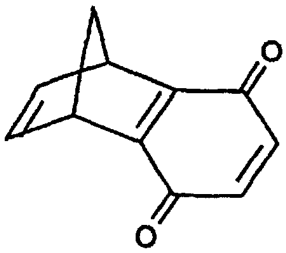 (4), 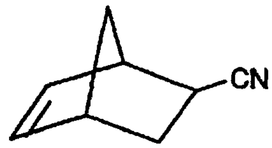 (5), 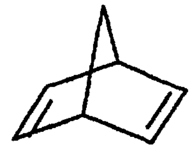 (6),

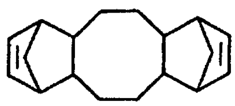 (7), 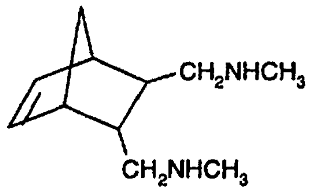 (8), 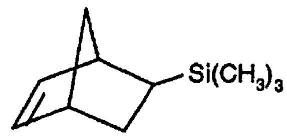 (9),

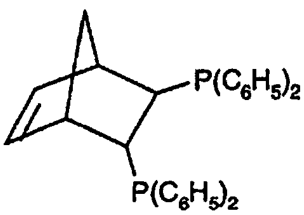 (10), 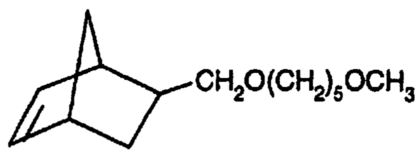 (11),

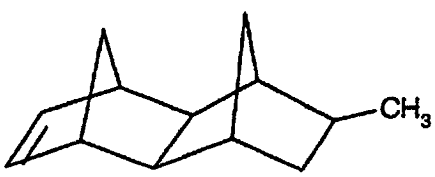 (11), 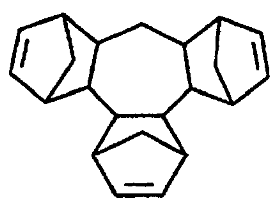 (12),

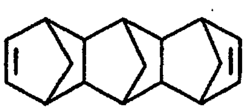 (13), 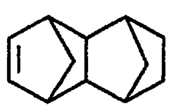 (14), 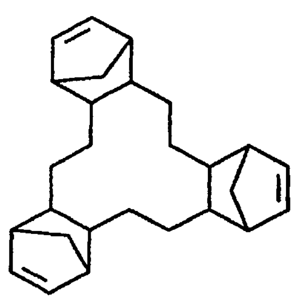 (15)

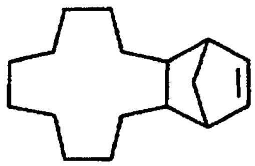 (16), 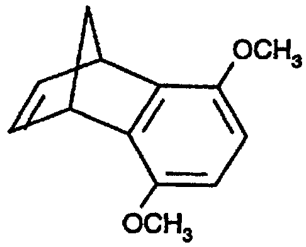 (17), 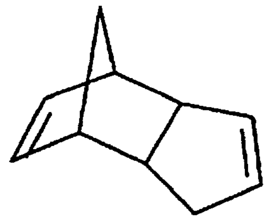 (18),

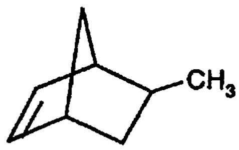 (19), 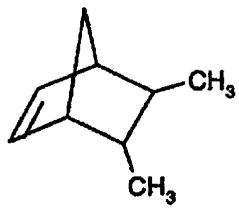 (20), 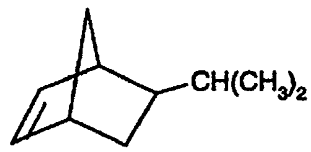 (21),

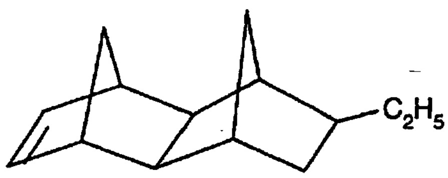 (22), 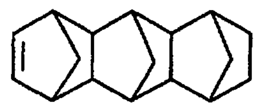 (23),

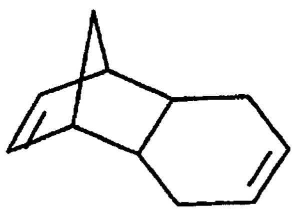 (24), 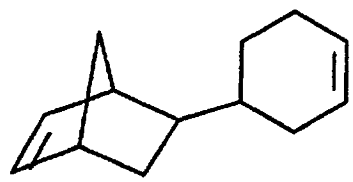 (25).

Bevorzugte Diels-Alder-Addukte sind Norbomen (1), Norbornadien (6), Cyclohexenylnorbornen (25), Tetracyclododecen (14), Methyltetracyclododecen (11) und insbesondere Dicyclopentadien (18).

Die Mengen der Komponenten (a), (b) und (c) können in den erfindungsgemässen Zusammensetzungen in weiten Bereichen variieren.

Bevorzugt sind Zusammensetzungen enthaltend, bezogen auf die Gesamtzusammensetzung (a) + (b) + (c), 0,001-10,0 Gew.-%, besonders bevorzugt 0,01-5,0 Gew.-%, insbesondere bevorzugt 0,1-2,0 Gew.-%, der Komponente (a), 0,001-10,0 Gew.-%, besonders bevorzugt 0,005-2,0 Gew.-%, insbesondere bevorzugt 0,01-1,0 Gew.-%, der Komponente (b) und 85,0-99,99 Gew.-%, besonders bevorzugt 90,0-99,9 Gew.-%, insbesondere bevorzugt 95,0-99,8 Gew.-%, der Komponente (c).

Das Gewichtsverhältnis von Monomer (Komponente c) zu Katalysatorgemisch (Komponenten a + b) kann ebenfalls in weiten Bereichen variieren.

Vorzugsweise enthalten die erfindungsgemässen Zusammensetzungen, bezogen auf die Gesamtzusammensetzung, 85,0-99,99 Gew.-%, insbesondere 90,0-99,9 Gew.-%, Monomer und 0,01-15,0 Gew.-%, insbesondere 0,1-10,0 Gew.-%, Katalysatorgemisch.

Die gewünschte Viskosität des härtbaren Gemisches kann durch Zusatz von thermoplastischen Materialien eingestellt werden. Beispiele für geeignete Thermoplasten sind Polystyrol, Polynorbomen (z.B. Norsorex® NS der Fa. Nippon Zeon), hydrierte Polynorbomenderivate (z.B. Zeonex® der Fa. Nippon Zeon), Polycycloocten (z.B. Vestenamer® der Fa. Hüls) und Polybutadien.

Weiterhin können die härtbaren Mischungen Zähigkeitsvermittler ("Toughener") enthalten, wie zum Beispiel Core/Shell-Polymere oder die dem Fachmann als "Rubber Toughener" bekannten Elastomere oder Elastomere enthaltende Pfropfpolymere. Geeignete Zähigkeitsvermittler sind beispielsweise in der EP-A-449 776 beschrieben.

Zur Verbesserung der elektrischen Eigenschaften (Dielektrizitätskonstante, Verlustfaktor) können den härtbaren Mischungen Silane, wie z.B. die von der Fa. Osi Specialties unter der Bezeichnung Silquest® Silan angebotenen Verbindungen, zugesetzt werden. Geeignete Silane sind beispielsweise Octyltriethoxysilan, Methyltriethoxysilan,

Vinyltriethoxysilan, Methyltrimethoxysilan, Vinyltrimethoxysilan, γ-Aminopropyltrimethoxysilan und γ-Glycidyloxypropyltrimethoxysilan.

Neben den oben erwähnten Additiven können die erfindungsgemässen Zusammensetzungen weitere übliche Zusatzstoffe enthalten, wie z.B. Antioxidantien, Lichtschutzmittel, Weichmacher, Farbstoffe, Füllstoffe, Pigmente, Thixotropiemittel, Entschäumer, Antistatika, Gleitmittel und Entformungshilfsmittel.

Weiterhin können die erfindungsgemässen Zusammensetzungen inerte Lösungsmittel enthalten.

Geeignete inerte Lösungsmittel sind zum Beispiel protisch-polare und aprotische Lösungsmittel, die allein oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylhamstoff, Hexamethylphosphorsäuretriamid, γ-Butyrolactam, ∈-Caprolactam, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin), aliphatische und aromatische Kohlenwasserstoffe, wie zum Beispiel Petrolether, Pentan, Hexan, Cyclohexan, Methylcyclohexan, Benzol oder substituierte Benzole (Chlorbenzol, o-Dichlorbenzol, 1,2,4-Trichlorbenzol, Nitrobenzol, Toluol, Xylol) und Nitrile (Acetonitril, Propionitril, Benzonitril, Phenylacetonitril). Bevorzugte Lösungsmittel sind aprotische polare und unpolare Lösungsmittel.

Bevorzugte Lösungsmittel sind aliphatische und aromatische Kohlenwasserstoffe sowie Gemische solcher Lösungsmittel.

Ein besonderer Vorteil der erfindungsgemässen Zusammensetzungen besteht darin, daß bei flüssigen Monomeren eine Metathesepolymerisation ohne die Verwendung eines Lösungsmittels durchgeführt werden kann.

Die erfindungsgemässe Zusammensetzung kann direkt vor der Polymerisation hergestellt oder als vorformuliertes Gemisch verwendet werden. Das Gemisch kann vor der Polymerisation als gebrauchsfertige Formulierung längere Zeit gelagert werden, was für die grosstechnische Anwendung von Vorteil ist. Es empfiehlt sich jedoch eine Lagerung unter Lichtausschluss, wenn der Katalysator photolabile Liganden enthält. Einen weiteren Erfindungsgegenstand bildet ein Verfahren zur Herstellung eines Metathesepolymerisats, dadurch gekennzeichnet, dass eine Zusammensetzung enthaltend die Komponenten (a) bis (c) auf eine Temperatur >40 °C erwärmt wird.

Zweckmässig wird das erfindungsgemässe Verfahren bei einer Temperatur von mindestens 60°C durchgeführt. Insbesondere wird das erfindungsgemäße Verfahren bei Temperaturen von 60 bis 300 °C, bevorzugt 60 bis 250 °C, besonders bevorzugt 60 bis bis 200 °C und insbesondere bevorzugt 70 bis 160 °C, durchgeführt. Nach der Polymerisation kann es vorteilhaft sein, das Gemisch bei erhöhten Temperaturen, zum Beispiel 80 bis 200 °C, nachzutempem.

Falls als Komponente (a) eine Verbindung der Formel I mit photolabilen Liganden eingesetzt wird, kann die Metathesepolymerisation auch photochemisch durchgeführt werden. In diesem Fall wird eine Zusammensetzung enthaltend die Komponenten (a) bis (c) mit UV-Strahlung oder sichtbarem Licht bestrahlt und gegebenenfalls thermisch nachgehärtet.

Die Polymerisation kann mit formgebenden Verfahren verbunden sein, zum Beispiel Kalandrier-, Giess-, Press-, Spritzguss- oder Extrusionsverfahren. Mit dem erfindungsgemässen Verfahren können Werkstoffe zur Herstellung von Formkörpern aller Art und Beschichtungen hergestellt werden. Vorteilhaft werden Formgebung und Polymerisation in lösungsmittelfreien Reaktivsystemen verbunden, wobei Verarbeitungsverfahren, wie zum Beispiel Spritzgiessen, Extrusion, Polymerisationen in vorgegebenen Formen (gegebenenfalls unter Druck) angwendet werden können.

Die nach dem erfindungsgemässen Verfahren hergestellten Gemische können Homopolymere, Copolymere mit statistischer Verteilung der Struktureinheiten, Pfropfpolymere, Blockpolymere oder vernetzte Polymere enthalten. Die Polymere können ein mittleres Molekulargewicht von 500 bis zu 2'000'000 Dalton, vorzugsweise 1000 bis 1'000'000 Dalton (bestimmt mittels Gelpermeationschromatographie) aufweisen.

Die nach dem erfindungsgemässen Verfahren hergestellten Gemische zeichnen sich vor allem durch eine hohe Wärmestabilität, hohe Zähigkeit und mechanische Festigkeit sowie durch hervorragende elektrische Eigenschaften (niedrige Dielektrizitätskonstante, niedriger Verlustfaktor bzw. tanδ-Wert) aus und eignen sich besonders für Anwendungen in der Vakuum-Giesstechnologie, als Giessharze, Imprägnierharze und insbesondere als Umhüllungsmaterial für elektrische und elektronische Bauteile.

Die gehärteten Vergussmassen weisen gute mechanische und dielektrische Eigenschaften und eine hohe Lebensdauer aus.

Gegenstand der vorliegenden Erfindung ist somit auch die Verwendung der erfindungsgemässen Zusammensetzung als Giessharz, Imprägnierharz und als Umhüllungsmaterial für elektrische oder elektronische Bauteile.

Beispiele:

In den Arbeitsbeispielen werden die folgenden Abkürzungen verwendet:

DSC: Differential Scanning Calorimetry
TGA: Thermogravimetrische Analyse
RT: Raumtemperatur
$T_g$: Glassübergangstemperatur
ΔH: Reaktionsenthalpie

In allen Beispielen wird kommerziell erhältliches Dicyclopentadien (BF Goodrich, USA) mit einer Reinheit von 98,4 % (bestimmt mittels Gaschromatographie) eingesetzt. Als ROMP-Katalysator wird $(C_6H_{11})_3P$(p-Cymol)$RuCl_2$ (Katalysator A) verwendet.

Beispiel 1:

200 g Dicyclopentadien wird durch Erwärmen auf 40 °C verflüssigt. Jeweils 50 mg Katalysator A wird zu 10 g des flüssigen Dicyclopentadiens gegeben und durch Rühren mit dem Magnetrührer bei 40 °C gelöst. Anschliessend wird die entsprechende Menge (siehe Tabelle 1) 1-Octin oder Phenylethin hinzugefügt und durch Umrühren gelöst. Zur Bestimmung der Reaktionsenthalpie ΔH mittels DSC (Aufheizrate: 10 °C/min) wird eine kleine Probe (Ca. 10 mg) entnommen. Die Mischung wird dann im Warmluftofen polymerisiert (Härtungszyklus: 1 h/80 °C, 1 h/100 °C, 2 h/120 °C). Die Glassübergangstemperatur des Polymerisats wird mittels DSC (Aufheizrate 10 °C/min) gemessen. Durch TGA wird der Gewichtsverlust zwischen RT und 300 °C bestimmt. Die Resultate sind in Tabelle 1 zusammengefasst.

Beispiel 2:

0,2 g Katalysator A wird in 100 g flüssigem Dicyclopentadien (erwärmt auf 40 °C) gelöst. Anschliessend wird die entsprechende Menge (siehe Tabelle 2) 1-Octin oder Phenylethin hinzugefügt und durch Umrühren gelöst. Die Mischung wird dann polymerisiert (Härtungszyklus: 1 h/80 °C, 1 h/100 °C, 2 h/120 °C), wobei die während der ersten Härtungsphase bei 80 °C auftretende Spitzentemperatur $T_{max}$ gemessen wird (in Klammem ist die Zeit in Minuten bis zum Erreichen der Spitzentemperatur angegeben), welche zusammen mit der mittels DSC bestimmten Glassübergangstemperatur und dem mittels TGA gemessenen Umsatz in Tabelle 2 angegeben ist.

Tabelle 1:

| Komponente (b) | $T_g$ [°C] | -ΔH [J/g] | Gewichtsverlust [%] | Bemerkung |
|---|---|---|---|---|
| ----- | n.b. | 48 | n.b.*) | halbfeste Masse, starker Geruch nach Dicyclopentadien |
| 2 mg 1-Octin | 35 | 262 | 11,7 | guter Festkörper |
| 4 mg 1 -Octin | n.b. | >300 | n.b. | guter Festkörper |
| 6 mg 1-Octin | 48 | >300 | n.b. | guter Festkörper |
| 8 mg 1-Octin | 53 | >300 | 13,4 | guter Festkörper |
| 10 mg 1-Octin | 57 | >300 | 11,6 | guter Festkörper |
| 15 mg 1-Octin | 60 | >300 | n.b. | guter Festkörper |
| 20 mg 1-Octin | 58 | >300 | 15,0 | guter Festkörper |
| 50 mg 1-Octin | 53 | 288 | 21,6 | guter Festkörper |
| 100 mg 1-Octin | 26 | n.b. | n.b. | weicher Festkörper |
| 9 mg Phenylethin | 127 | 289 | 3,5 | hervorragender Festkörper |
| 13 mg Phenylethin | 125 | 284 | 5,2 | hervorragender Festkörper |

*) n.b.: nicht bestimmt

Tabelle 2:

| Komponente (b) | $T_{max}$/°C | $T_g$/°C | Umsatz/% |
|---|---|---|---|
| 52 mg Phenylethin | 170 (40 min) | 115 | 93 |
| 56 mg 1-Octin | 189 (24 min) | 130 | 95 |

**Patentansprüche**

**1.** Zusammensetzung enthaltend

(a) eine Verbindung der Formel I

$$(R_1R_2R_3P)_xL_yMe^{2+}Z_1^-Z_2^- \quad (I),$$

worin $R_1$, $R_2$ und $R_3$ unabhängig voneinander H, $C_1$-$C_{20}$-Alkyl, $C_1$-$C_{20}$-Alkoxy, unsubstituiertes oder mit $C_1$-$C_6$-Alkyl, $C_1$-$C_6$-Halogenalkyl oder $C_1$-$C_6$-Alkoxy substituiertes $C_4$-$C_{12}$-Cycloalkyl oder Cycloalkoxy, oder unsubstituiertes oder mit $C_1$-$C_6$-Alkyl, $C_1$-$C_6$-Halogenalkyl oder $C_1$-$C_6$-Alkoxy substituiertes $C_6$-$C_{16}$-Aryl oder $C_6$-$C_{16}$-Aryloxy, oder unsubstituiertes oder mit $C_1$-$C_6$-Alkyl, $C_1$-$C_6$-Halogenalkyl oder $C_1$-$C_6$-Alkoxy substituiertes $C_7$-$C_{16}$-Aralkyl oder $C_7$-$C_{16}$-Aralkyloxy darstellen;
die Reste $R_2$ und $R_3$ gemeinsam unsubstituiertes oder mit $C_1$-$C_6$-Alkyl, $C_1$-$C_6$-Halogenalkyl oder $C_1$-$C_6$-Alkoxy substituiertes Tetra- oder Pentamethylen, oder Tetraoder Pentamethylendioxyl bedeuten, oder unsubstituiertes oder mit $C_1$-$C_6$-Alkyl, $C_1$-$C_6$-Halogenalkyl oder $C_1$-$C_6$-Alkoxy substituiertes und mit ein oder zwei 1,2-Phenylenresten kondensiertes Tetra- oder Pentamethylen, oder Tetra- oder Pentamethylendioxyl darstellen, oder unsubstituiertes oder mit $C_1$-$C_6$-Alkyl, $C_1$-$C_6$-Halogenalkyl oder $C_1$-$C_6$-Alkoxy substituiertes und in den 1,2- und 3,4-Stellungen mit 1,2-Phenylen kondensiertes Tetramethylendioxyl darstellen, und $R_1$ die zuvor angebene Bedeutung hat;
L einen Neutralliganden bedeutet, Me für Ru oder Os steht, $Z_1^-$ und $Z_2^-$ je ein einfach geladenes Anion oder $Z_1^-$ und $Z_2^-$ zusammen ein zweifach geladenes Anion darstellen, x eine Zahl von 1 bis 3 und y eine Zahl von 0 bis 3 darstellen, wobei gilt $2 \leq x+y \leq 4$; und
(b) eine Verbindung der Formel II

$$R_4\text{-}C{\equiv}C\text{-}H \quad (II),$$

worin $R_4$ Wasserstoff oder einen einwertigen organischen Rest mit bis zu 30 C-Atomen bedeutet, welcher ein oder mehrere Silicium-, Phosphor-, Stickstoff-, Schwefel- oder Halogenatome enthalten kann.
(c) ein Dicyclopentadien.

**2.** Zusammensetzung nach Anspruch 1, enthaltend als Komponente (a) eine Verbindung der Formel I, worin Me für Ruthenium steht.

**3.** Zusammensetzung nach Anspruch 1, enthaltend als Komponente (a) eine Verbindung der Formel I, worin $R_1$, $R_2$ und $R_3$ unabhängig voneinander für $C_1$-$C_6$-Alkyl, $C_1$-$C_6$-Alkoxy, $C_4$-$C_{12}$-Cycloalkyl, $C_4$-$C_{12}$-Cycloalkoxy, $C_6$-$C_{16}$-Aryl oder $C_6$-$C_{16}$-Aryloxy stehen.

**4.** Zusammensetzung nach Anspruch 1, enthaltend als Komponente (a) eine Verbindung der Formel I, worin $R_1$, $R_2$ und $R_3$ unabhängig voneinander für Isopropyl, sek.-Butyl, Phenyl, Tolyl, Cyclopentyl oder Cyclohexyl stehen.

**5.** Zusammensetzung nach Anspruch 1, enthaltend als Komponente (a) eine Verbindung der Formel I, worin L für unsubstituiertes oder mit 1 bis 3 $C_1$-$C_4$-Alkyl substituiertes Benzol, Thiophen, Benzonitril, Acetonitril, Stickstoff ($N_2$), einen unsubstituierten oder teilweise oder vollständig fluorierten $C_1$-$C_4$-Alkohol, CO, $H_2O$ oder $NH_3$ steht.

**6.** Zusammensetzung nach Anspruch 1, enthaltend als Komponente (a) eine Verbindung der Formel I, worin $Z_1^-$ und $Z_2^-$ unabhängig voneinander für $H^-$, $F^-$, $Cl^-$, $Br^-$, $I^-$ oder unsubstituiertes oder durch eine oder mehrere Hydroxidgruppen, Aminogruppen, Halogenatome, $C_1$-$C_{20}$-Alkyl-, $C_1$-$C_{20}$-Alkoxy-, $C_4$-$C_{12}$-Cycloalkyl-, $C_4$-$C_{12}$-Cycloalkoxy-,

$C_6$-$C_{16}$-Aryl-, $C_6$-$C_{16}$-Aryloxy- oder $C_7$-$C_{16}$-Aralkylgruppen substituiertes Cyclopentadienyl stehen.

**7.** Zusammensetzung nach Anspruch 1, enthaltend als Komponente (b) eine Verbindung der Formel II, worin $R_4$ eine unsubstituierte oder durch eine oder mehrere Aminogruppen oder Halogenatome substituierte $C_1$-$C_{20}$-Alkyl-, $C_1$-$C_{20}$-Alkoxy-, $C_4$-$C_{12}$-Cycloalkyl-, $C_4$-$C_{12}$-Cycloalkoxy-, $C_6$-$C_{16}$-Aryl-, $C_6$-$C_{16}$-Aryloxy- oder $C_7$-$C_{16}$-Aralkylgruppe darstellt.

**8.** Zusammensetzung nach Anspruch 1, enthaltend als Komponente (b) eine Verbindung der Formel II, worin $R_4$ für $C_1$-$C_{12}$-Alkyl oder $C_6$-$C_{10}$-Aryl steht.

**9.** Zusammensetzung nach Anspruch 1, enthaltend als Komponente (b) 1-Heptin, 1-Octin, 1-Decin oder Phenylethin.

**10.** Zusammensetzung nach Anspruch 1, worin das Molverhältnis der Komponenten (a): (b) 25:1 1 bis 1:10 beträgt.

**11.** Zusammensetzung nach Anspruch 1, enthaltend, bezogen auf die Gesamtzusammensetzung, 0,001-10,0 Gew.-% der Komponente (a), 0,001-10,0 Gew.-% der Komponente (b) und 85,0-99,99 Gew.-% der Komponente (c).

**12.** Verfahren zur Herstellung eines Metathesepolymerisats, **dadurch gekennzeichnet, dass** eine Zusammensetzung nach Anspruch 1 auf eine Temperatur >40 °C erwärmt wird.

**13.** Verwendung des Metathesepolymerisats nach Anspruch 12 als Giessharz, Imprägnierharz oder als Umhüllungsmaterial für elektrische oder elektronische Bauteile.

## Claims

**1.** A composition, comprising

(a) a compound of formula I

$$(R_1R_2R_3P)_xL_yMe^{2+}Z_1^-Z_2^- \quad \text{(I)},$$

wherein $R_1$, $R_2$ and $R_3$ are each independently of one another H, $C_1$-$C_{20}$alkyl, $C_1$-$C_{20}$-alkoxy; $C_4$-$C_{12}$cycloalkyl or cycloalkoxy which is unsubstituted or substituted by $C_1$-$C_6$-alkyl, $C_1$-$C_6$haloalkyl or $C_1$-$C_6$alkoxy, or $C_6$-$C_{16}$aryl or $C_6$-$C_{16}$aryloxy which is unsubstituted or substituted by $C_1$-$C_6$alkyl, $C_1$-$C_6$haloalkyl or $C_1$-$C_6$alkoxy, or $C_7$-$C_{16}$-aralkyl or $C_7$-$C_{16}$aralkyloxy which is unsubstituted or substituted by $C_1$-$C_6$alkyl, $C_1$-$C_6$-haloalkyl or $C_1$-$C_6$alkoxy;
$R_2$ and $R_3$ together are tetra- or pentamethylene or tetra- or pentamethylenedioxyl which is unsubstituted or substituted by $C_1$-$C_6$alkyl, $C_1$-$C_6$haloalkyl or $C_1$-$C_6$alkoxy, or tetra- or pentamethylene or tetra- or pentamethylenedioxyl which is unsubstituted or substituted by $C_1$-$C_6$alkyl, $C_1$-$C_6$haloalkyl or $C_1$-$C_6$alkoxy and which is condensed with one or two 1,2-phenylene radicals, or tetramethylenedioxyl which is unsubstituted or substituted by $C_1$-$C_6$alkyl, $C_1$-$C_6$haloalkyl or $C_1$-$C_6$alkoxy and which is condensed in 1,2- and 3,4-position with 1,2-phenylene, and $R_1$ has the meaning cited above;
L is a neutral ligand, Me is Ru or Os, $Z_1^-$ and $Z_2^-$ are each a singly charged anion, or $Z_1^-$ and $Z_2^-$ together are a doubly charged anion, x is a number from 1 to 3, and y is a number from 0 to 3, wherein $2 \leq x+y \leq 4$; and
(b) is a compound of formula II

$$R_4\text{-C}\equiv\text{C-H} \quad \text{(II)},$$

wherein $R_4$ is hydrogen or a monovalent organic radical of up to 30 carbon atoms which may contain one or several silicium, phosphorus, nitrogen, sulfur or halogen atoms.
(c) a dicyclopentadiene.

**2.** A composition according to claim 1, wherein component (a) is a compound of formula I, wherein Me is ruthenium.

**3.** A composition according to claim 1, wherein component (a) is a compound of formula I, wherein $R_1$, $R_2$ and $R_3$ are each independently of one another $C_1$-$C_6$alkyl, $C_1$-$C_6$alkoxy, $C_4$-$C_{12}$cycloalkyl, $C_4$-$C_{12}$cycloalkoxy, $C_6$-$C_{16}$aryl or $C_6$-$C_{16}$aryloxy.

**4.** A composition according to claim 1, wherein component (a) is a compound of formula I, wherein $R_1$, $R_2$ and $R_3$ are each independently of one another isopropyl, sec-butyl, phenyl, tolyl, cyclopentyl or cyclohexyl.

**5.** A composition according to claim 1, wherein component (a) is a compound of formula I, wherein L is benzene, thiophene, benzonitrile or acetonitrile which are unsubstituted or substituted by 1 to 3 $C_1$-$C_4$alkyl, nitrogen ($N_2$), unsubstituted or partially or completely fluorinated $C_1$-$C_4$alcohol, CO, $H_2O$ or $NN_3$.

**6.** A composition according to claim 1, wherein component (a) is a compound of formula I, wherein $Z_1^-$ and $Z_2^-$ are each independently of the other $H^-$, $F^-$, $Cl^-$, $Br^-$, $I^-$, or cyclopentadienyl which is unsubstituted or substituted by one or several hydroxide groups, amino groups, halogen atoms, $C_1$-$C_{20}$alkyl groups, $C_1$-$C_{20}$alkoxy groups, $C_4$-$C_{12}$cycloalkyl groups, $C_4$-$C_{12}$cycloalkoxy groups, $C_6$-$C_{16}$aryl group, $C_6$-$C_{16}$aryloxy groups or $C_7$-$C_{16}$aralkyl groups.

**7.** A composition according to claim 1, wherein component (b) is a compound of formula II, wherein $R_4$ is a $C_1$-$C_{20}$alkyl, $C_1$-$C_{20}$alkoxy, $C_4$-$C_{12}$cycloalkyl, $C_4$-$C_{12}$Cycloalkoxy, $C_6$-$C_{16}$aryl, $C_6$-$C_{16}$aryloxy or $C_7$-$C_{16}$aralkyl group which is unsubstituted or substituted by one or several amino groups or halogen atoms.

**8.** A composition according to claim 1, wherein component (b) is a compound of formula II, wherein $R_4$ is $C_1$-$C_{12}$alkyl or $C_6$-$C_{10}$aryl.

**9.** A composition according to claim 1, wherein component (b) is 1-heptyne, 1-octyne, 1-decyne or phenylethyne.

**10.** A composition according to claim 1, wherein the molar ratio of components (a) : (b) is from 25 : 1 to 1 : 10.

**11.** A composition according to claim 1, comprising 0.001-10.0 % by weight of component (a), 0.001-10.0 % by weight of component (b) and 85.0-99.99 % by weight of component (c), based on the entire composition.

**12.** A process for the preparation of a metathesis polymer, which comprises heating a composition as claimed in claim 1 to a temperature of >40 °C.

**13.** Use of the metathesis polymer according to claim 12 as casting resin, impregnating resin or as encapsulating material for electrical or electronic components.

**Revendications**

**1.** Composition comprenant

(a) un composé de formule I

$$(R_1R_2R_3P)_xL_yMe^{2+}Z_1^-Z_2^- \quad (I),$$

où $R_1$, $R_2$ et $R_3$ représentent, indépendamment l'un de l'autre, un atome d'hydrogène, un groupe alkyle en $C_1$-$C_{20,}$ un groupe alkoxy en $C_1$-$C_{20}$, un groupe cycloalkyle en $C_4$-$C_{12}$ ou cycloalkoxy non substitué ou substitué par des substituants alkyle en $C_1$-$C_6$, haloalkyle en $C_1$-$C_6$ ou alkoxy en $C_1$-$C_6$, ou un groupe aryle en $C_{6-}C_{16}$ ou aryloxy en $C_{6-}C_{16}$ non substitué ou substitué par des substituants alkyle en $C_{1-}C_6$, haloalkyle en $C_{1-}C_6$ ou alkoxy en $C_{1-}C_6$, ou un groupe aralkyle en $C_{7-}C_{16}$ ou aralkyloxy en $C_{7-}C_{16}$ non substitué ou substitué par des substituants alkyle en $C_1$-$C_6$, haloalkyle en $C_1$-$C_6$ ou alkoxy en $C_{1-}C_6$ ; les restes $R_2$ et $R_3$ forment ensemble un groupe tétra- ou pentaméthylène, ou tétra- ou pentaméthylènedioxyle non substitué ou substitué par des substituants alkyle en $C_1$-$C_6$, haloalkyle en $C_1$-$C_6$ ou alkoxy en $C_1$-$C_6$, ou un groupe tétra- ou pentaméthylène, ou tétra- ou pentaméthylènedioxyle non substitué ou substitué par des substituants alkyle en $C_1$-$C_6$, haloalkyle en $C_1$-$C_6$ ou alkoxy en $C_{1-}C_6$ et condensé sur un ou deux restes 1,2-phénylène, ou un groupe

tétraméthylènedioxyle non substitué ou substitué par des substituants alkyle en $C_1$-$C_6$, haloalkyle en $C_1$-$C_6$ ou alkoxy en $C_1$-$C_6$ et condensé sur un reste 1,2-phénylène en positions 1,2 ou 3,4, et $R_1$ possède la signification donnée auparavant ;

L représente un ligand neutre, Me représente Ru ou Os, $Z_1^-$ et $Z_2^-$ sont chacun un anion chargé simplement ou $Z_1^-$ et $Z_2$- sont ensemble un anion chargé doublement,

x est un nombre de 1 à 3 et y un nombre de 0 à 3, auquel cas on a $2 \leq x+y \leq 4$ ;

et

(b) un composé de formule II

$$R_4\text{-}C{\equiv}C\text{-}H \quad \text{(II)},$$

où $R_4$ représente un atome d'hydrogène ou un reste organique monovalent ayant jusqu'à 30 atomes de carbone, lequel peut présenter un ou plusieurs atome de silice, de phosphore, d'azote, de soufre ou d'halogène,

(c ) un dicyclopentadiène.

**2.** Composition selon la revendication 1, comprenant en tant que composant (a), un composé de formule I, dans laquelle Me représente le ruthénium.

**3.** Composition selon la revendication 1, comprenant, en tant que composant (a), un composé de formule I, dans laquelle $R_1$, $R_2$ et $R_3$ représentent indépendamment l'un de l'autre un alkyle en $C_1$-$C_6$, alcoxy en $C_1$-$C_6$, cycloalkyle en $C_4$-$C_{12}$, cycloalkoxy en $C_4$-$C_{12}$, aryle en $C_6$-$C_{16}$ ou aryloxy en $C_6$-$C_{16}$.

**4.** Composition selon la revendication 1, comprenant, en tant que composant (a), un composé de formule I, dans laquelle $R_1$, $R_2$ et $R_3$ représentent indépendamment l'un de l'autre des groupes isopropyle, sec.-butyle, phényle, tolyle, cyclopentyle ou cyclohexyle.

**5.** Composition selon la revendication 1, comprenant, en tant que composant (a), un composé de formule I, dans laquelle L représente le benzène non substitué ou substitué par 1 à 3 substituants alkyle en $C_1$-$C_4$, le thiophène, le benzonitrile, l'acétonitrile, l'azote ($N_2$), un alcool en $C_1$-$C_4$ non substitué ou fluoré en partie ou complètement, CO, $H_2O$ ou $NH_3$.

**6.** Composition selon la revendication 1, comprenant, en tant que composant (a), un composé de formule I, dans laquelle $Z_1^-$ et $Z_2^-$ représentent indépendamment l'un de l'autre $H^-$, $F^-$, $Cl^-$, $Br^-$, I- ou un groupe cyclopentadiényle non substitué ou substitué par un ou plusieurs groupes hydroxyle , groupes amino, atomes d'halogène, groupes alkyle en $C_1$-$C_{20}$, alcoxy en $C_1$-$C_{20}$, cycloalkyle en $C_4$-$C_{12}$, cycloalcoxy en $C_4$-$C_{12}$, aryle en $C_6$-$C_{16}$, aryloxy en $C_6$-$C_{16}$ ou aralkyle en $C_7$-$C_{16}$.

**7.** Composition selon la revendication 1, comprenant en tant que composant (b), un composé de formule II, dans laquelle $R_4$ représente un groupe alkyle en $C_1$-$C_{20}$, alkoxy en $C_1$-$C_{20}$, cycloalkyle en $C_4$-$C_{12}$, cycloalkoxy en $C_4$-$C_{12}$, aryle en $C_6$-$C_{16}$, aryloxy en $C_6$-$C_{16}$ ou aralkyle en $C_7$-$C_{16}$ non substitué ou substitué par un ou plusieurs groupes amino ou atomes d'halogène.

**8.** Composition selon la revendication 1, comprenant en tant que composant (b), un composé de formule II, dans laquelle $R_4$ représente un groupe hydroxyalkyle en $C_1$-$C_{12}$ ou aryle en $C_6$-$C_{10}$.

**9.** Composition selon la revendication 1, comprenant en tant que composant (b) la 1-heptyne, la 1-octyne, la 1-décyne ou le phényléthyne.

**10.** Composition selon la revendication 1, dans laquelle le rapport molaire des composants (a):(b) est de 25:1 à 1:10.

**11.** Composition selon la revendication 1, comprenant, par rapport à la totalité de la composition, de 0,001 à 10,0 % en poids de composant (a), de 0,001 à 10,0 % en poids de composant (b) et de 85,0 à 99,99 % en poids du composant (c).

**12.** Procédé pour préparer un polymère par métathèse, **caractérisé en ce qu'**on chauffe une composition selon la revendication 1 à une température >40°C.

**13.** Utilisation d'un polymère par métathèse selon la revendication 12, en tant que résine à couler, résine d'imprégnation ou en tant que matériau de gainage pour des composants électriques ou électroniques.